(19) Europäisches Patentamt
European Patent Office
Office européen des brevets

(11) **EP 2 104 939 B1**

(12) **FASCICULE DE BREVET EUROPEEN**

(45) Date de publication et mention de la délivrance du brevet:
**19.08.2015 Bulletin 2015/34**

(21) Numéro de dépôt: **07872437.4**

(22) Date de dépôt: **21.12.2007**

(51) Int Cl.:
***G21C 17/022*** *(2006.01)*

(86) Numéro de dépôt international:
**PCT/FR2007/002155**

(87) Numéro de publication internationale:
**WO 2008/093026 (07.08.2008 Gazette 2008/32)**

(54) **PROCEDE D'ESTIMATION DE LA CONCENTRATION EN UN ELEMENT CHIMIQUE DANS LE LIQUIDE DE REFROIDISSEMENT PRIMAIRE D'UN REACTEUR NUCLEAIRE**

VERFAHREN ZUR BEWERTUNG DER KONZENTRATION EINES CHEMISCHEN ELEMENTS IN DER KÜHLFLÜSSIGKEIT DES PRIMÄRKREISLAUFS EINES KERNREAKTORS

METHOD FOR ESTIMATING THE CONCENTRATION OF A CHEMICAL ELEMENT IN THE PRIMARY COOLANT OF A NUCLEAR REACTOR

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.12.2006 FR 0611383**

(43) Date de publication de la demande:
**30.09.2009 Bulletin 2009/40**

(73) Titulaire: **Areva NP**
**92400 Courbevoie (FR)**

(72) Inventeur: **VERNERET, Claude**
**F-95800 Cergy (FR)**

(74) Mandataire: **Jacobson, Claude**
**Cabinet Lavoix**
**2, Place d'Estienne d'Orves**
**75441 Paris Cedex 09 (FR)**

(56) Documents cités:
**GB-A- 1 532 071     US-A- 4 204 259**
**US-A- 4 814 050     US-A1- 2003 190 253**
**US-B1- 6 539 311**

**Description**

L'invention concerne en général les procédés d'estimation de la concentration en un élément chimique dans le liquide de refroidissement primaire d'un réacteur nucléaire, notamment le bore (cf. aussi US 4204259).

Plus précisément, l'invention concerne un procédé d'estimation de la concentration C en un élément chimique dans le liquide de refroidissement primaire d'un réacteur nucléaire, selon le préambule de la revendication 1.

Dans les réacteurs nucléaires dont le liquide primaire comprend essentiellement de l'eau, comme par exemple les réacteurs à eau pressurisée, la réactivité du coeur du réacteur est contrôlée, entre autres, en ajoutant du bore dans le liquide primaire. Le bore est un poison neutronique, qui absorbe une partie du flux neutronique généré par les réactions nucléaires dans le coeur du réacteur. Ainsi, quand la concentration en bore dans le liquide primaire augmente, la puissance thermique dégagée par le coeur du réacteur baisse. Au contraire, quand la concentration en bore diminue dans le liquide primaire, la puissance thermique dégagée par le coeur du réacteur augmente.

La concentration en bore dans le liquide primaire est ajustée, automatiquement ou manuellement, en fonction de consignes de pilotage du réacteur, par exemple en fonction de la consigne de puissance électrique à fournir par le réacteur au réseau haute tension de distribution électrique.

Dans ce but, le réacteur est équipé d'un circuit appelé REA. Ce circuit comprend des moyens pour injecter dans le liquide primaire une solution contenant essentiellement de l'eau et ne contenant pas de bore, en vue d'ajuster à la baisse la concentration de bore dans le liquide primaire. Le circuit REA comprend également des moyens pour injecter dans le liquide primaire une solution concentrée à 7000 ppm en bore, en vue d'ajuster à la hausse la concentration en bore dans le liquide primaire. Dans un cas comme dans l'autre, le volume de liquide primaire est maintenu constant en soutirant du circuit primaire un volume de liquide correspondant au volume injecté.

Il est donc très important pour le pilotage du réacteur nucléaire de connaître à chaque instant la concentration en bore dans le liquide primaire.

Dans ce but, le réacteur est équipé d'un ou plusieurs capteurs (bore-mètres) aptes à mesurer la concentration en bore dans le liquide de refroidissement primaire.

La concentration en bore du liquide primaire mesurée automatiquement par le boremètre est imprécise (bruit de l'ordre de 7%) et est fournie avec un retard important, de l'ordre de la vingtaine de minutes.

Afin de s'affranchir du retard de la mesure, on pourrait estimer la concentration en bore dans le liquide primaire par intégration des débits d'eau et de solution concentrée injectés par l'intermédiaire du REA dans le liquide primaire. Ces débits sont à l'origine des variations de concentration en bore.

La méthode par intégration des débits repose sur les équations suivantes.

La variation dC de la concentration en bore C dans le liquide primaire, pour une masse de liquide primaire M constante, est causée par l'injection d'une charge de liquide de concentration C* en bore (solution concentrée en bore ou eau) et par le soutirage concomitant d'une charge de liquide primaire de concentration C. Le bilan de masse s'écrit donc :

$$M \, dC = C^* \, dm - C \, dm$$

où dm est la masse à la fois de la charge de liquide injectée et de la charge de liquide primaire soutirée, avec C* = 0 ppm pour une dilution et C* = 7000 ppm pour une injection d'une solution concentrée en bore.

Si on suppose que les débits d'injection et de soutirage sont constants et égaux, le bilan devient :

$$M \, dC = \left(C^* - C\right) q \, dt$$

où q est le débit d'injection/de soutirage et dt un intervalle de temps.

On obtient en intégrant :

$$\ln\left(C(t) - C^*\right) = \ln\left(C(0) - C^*\right) - \frac{q}{M} t$$

où C(0) est la concentration de bore dans le liquide primaire à t = 0, soit

$$C(t) = C^* + \left(C(0) - C^*\right) e^{-\frac{q}{M}t}$$

ou également $\left(C^* - C(t)\right) = \left(C^* - C(0)\right) e^{-\frac{q}{Vol}t}$ si q n'est plus un débit massique mais un débit volumique, Vol étant le volume de liquide primaire.

Ce procédé présente l'avantage de permettre une estimation rapide de la variation de la concentration en bore dès la fin de l'action de dilution ou d'injection d'une solution concentrée en bore (borication). La non prise en compte des retards, liés au temps de parcours de la charge dans le circuit primaire et à la durée nécessaire pour que la charge injectée se dilue et pour que la concentration en bore s'homogénéise dans le liquide primaire, anticipe même l'estimation de la concentration en bore d'une dizaine de minutes.

Les équations ci-dessus permettent de simuler différents types d'action (dilution ou borication), pour un débit d'injection constant, et également de simuler une situation stationnaire (pas d'injection). Elles donnent la concentration finale (après l'action) à partir d'une concentration initiale (avant l'action). Il est donc nécessaire de réactualiser la concentration de départ C(0) avant chaque action, ce que permet une approche itérative.

Dans cette approche itérative, on applique à chaque pas de temps k l'équation suivante :

$$\left(C^* - C_{k+1}\right) = \left(C^* - C_k\right) e^{-\frac{q}{Vol}\Delta t}$$

où $C_k$ est l'estimation de la concentration de bore dans le liquide primaire au pas k, C* étant choisie égale à 0 ou 7000 ppm, comme précédemment, selon que l'action en cours est une dilution ou une borication. $\Delta t$ est la durée d'un pas de temps.

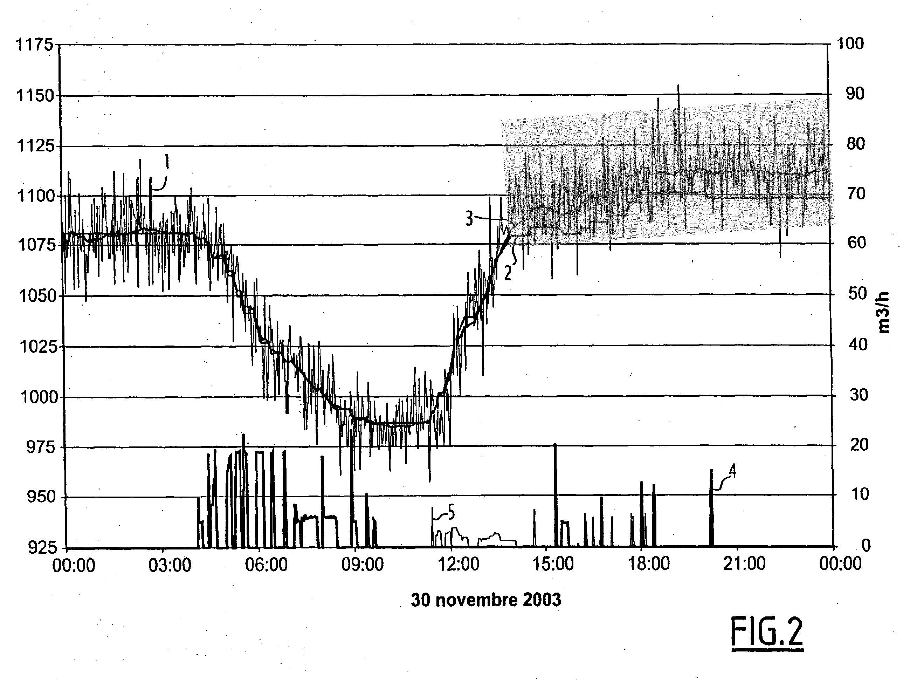

Le premier inconvénient du procédé par intégration des débits est qu'il se produit une dérive à terme de la valeur estimée par rapport à la valeur réelle (voir figure 2 par exemple). Cette dérive provient des erreurs cumulées à chaque pas de temps, dues par exemple à l'écart entre le débit q utilisé par les équations et le débit d'injection réel.

Le second inconvénient provient de l'étape d'initialisation, qui est nécessaire pour un tel procédé itératif. L'initialisation doit être la plus précise possible, sous peine de fausser les résultats à chaque pas de temps. Elle peut être effectuée en choisissant comme une valeur initiale C0 pour la concentration en bore dans le liquide primaire une moyenne des mesures relevées par le boremètre sur un période donnée. Pour les figures 2 et 4 à 6, le procédé itératif (courbe 2) a été initialisé en prenant en compte la moyenne des valeurs relevées pour les quatre heures précédant le démarrage du procédé. Toutefois, il est impossible, dans ce cas, d'être sûr que la moyenne obtenue est représentative de la concentration réelle en bore à l'instant où le procédé itératif démarre. L'initialisation peut également être réalisée en prenant comme valeur initiale la concentration en bore mesurée par dosage chimique, ce qui est précis mais contraignant et peu rapide.

En tout état de cause, le cumul de ces deux inconvénients rend cette méthode peu robuste.

Par ailleurs, le procédé par intégration des débits ignore les autres sources de variation de la concentration en bore, comme par exemple l'injection de fluide dans le circuit primaire en provenance du pressuriseur, du ballon RCV, des filtres de déminéralisation, ...

Dans ce contexte, l'invention vise à proposer un procédé d'estimation qui soit plus robuste que le procédé par intégration des débits.

A cette fin, l'invention porte sur un procédé d'estimation selon la revendication 1.

Le procédé peut également présenter une ou plusieurs des caractéristiques des revendications dépendantes, considérées individuellement ou selon toutes les combinaisons techniquement possibles.

D'autres caractéristiques et avantages de l'invention ressortiront de la description détaillée qui en est donnée ci-dessous, à titre indicatif et nullement limitatif, en référence aux figures annexées, parmi lesquelles :

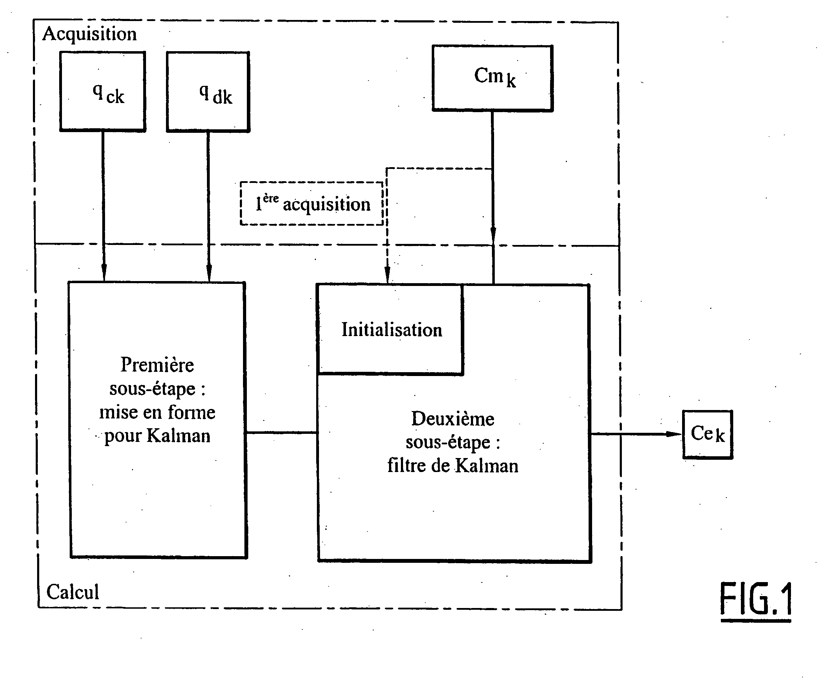

- la figure 1 est un schéma bloc montrant les principales étapes du procédé de l'invention ;
- la figure 2 est une représentation graphique montrant l'évolution sur une journée de la concentration en bore dans le liquide primaire, exprimée en ppm (échelle de gauche), mesurée par le boremètre (courbe 1), estimée par le procédé d'intégration des débits (courbe 2), et estimée par le procédé de l'invention (courbe 3), la figure représentant en outre l'évolution au cours de la journée des débits d'injection d'eau (courbe 4) et de solution concentrée en bore (courbe 5), exprimés en mètre cube par heure (échelle de droite) ;

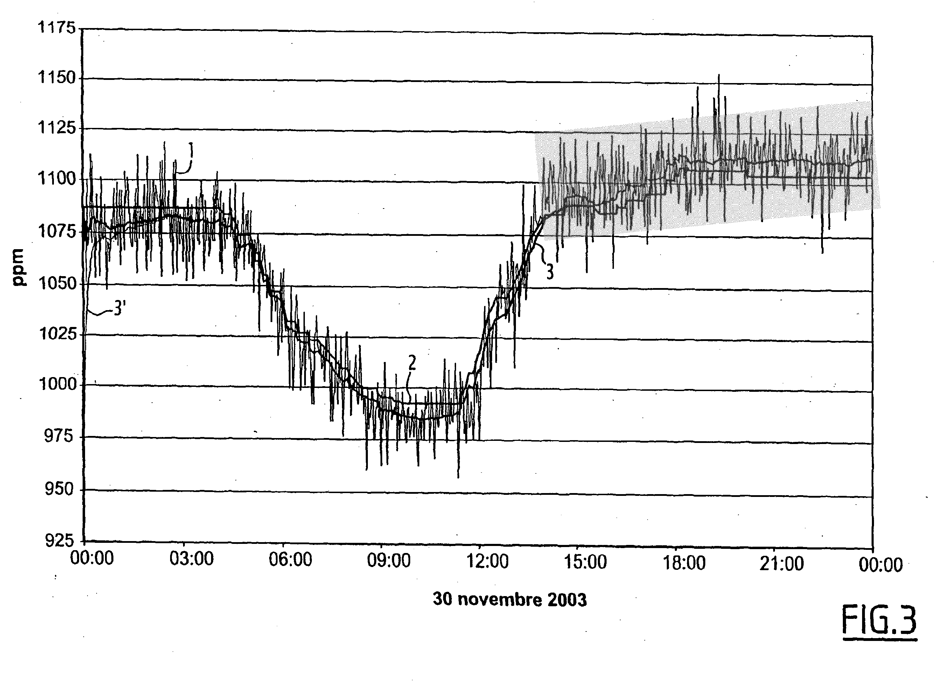

- la figure 3 est une représentation graphique similaire à celle de la figure 2, montrant l'évolution de la concentration en bore dans le liquide primaire, estimée à l'aide du procédé de l'invention initialisé normalement à l'aide de la première mesure du boremètre (courbe 3), estimée à l'aide du procédé de l'invention initialisé à l'aide d'une valeur aberrante de 500ppm (courbe 3') et estimée par le procédé d'intégration des débits initialisé à l'aide de la première mesure du boremètre (courbe 2) ; et

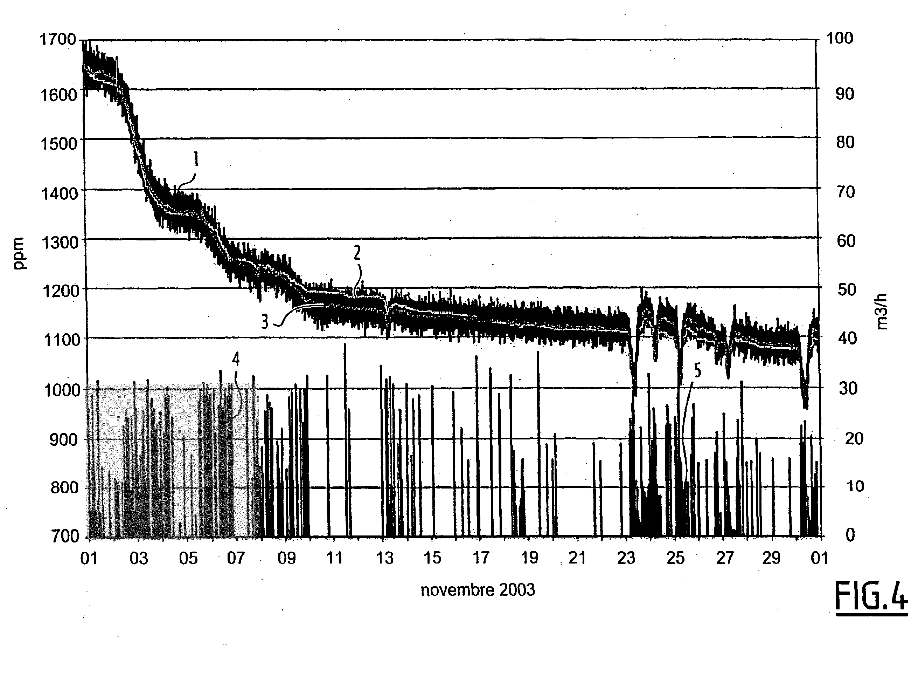

- les figures 4 à 6 sont des représentations graphiques similaires à celle de la figure 2, et représentent l'évolution de la concentration en bore dans le liquide primaire et les débits d'injection, pour trois périodes d'un mois, dans un cas d'exploitation réelle de centrale nucléaire.

Le procédé représenté schématiquement sur la figure 1 vise à estimer la concentration en bore C dans le liquide de refroidissement primaire d'un réacteur nucléaire.

Ce réacteur, comme décrit ci-dessus, comprend des moyens pour injecter dans le liquide primaire une solution de dilution de concentration en ledit élément chimique inférieure à une limite prédéterminée, des moyens pour injecter dans le liquide une solution concentrée en ledit élément chimique de concentration prédéterminée $C^*$, et un capteur apte à mesurer une grandeur $C_m$ représentative de la concentration dudit élément chimique dans le liquide de refroidissement primaire.

Les moyens d'injection sont constitués par le circuit REA du réacteur, qui est apte à injecter de l'eau ne contenant pas de bore (solution de dilution), ou une solution concentrée par exemple à une concentration $C^*$ de 7000 ppm en bore. Le circuit REA est connu et ne sera pas décrit ici.

Le procédé est un procédé itératif comprenant :

- une étape d'initialisation,

puis, de manière répétée, à chaque pas de temps k :

- une étape d'acquisition d'une grandeur $q_{dk}$ représentative du débit d'injection de la solution de dilution au pas k, d'une grandeur $q_{ck}$ représentative du débit d'injection de la solution concentrée au pas k, et d'une grandeur $C_{mk}$ représentative de la concentration en bore mesurée par le capteur dans le liquide de refroidissement primaire ;
- une étape de calcul d'une valeur estimée $C_{ek+1}$ de la concentration en bore dans le liquide primaire au pas k+1 en fonction des grandeurs représentatives $q_{dk}$, $q_{ck}$ et $C_{mk}$ acquises à l'étape k.

Au cours de l'étape d'initialisation, une valeur estimée initiale $C_{e0}$ de la concentration en bore dans le liquide primaire est choisie. Cette valeur est calculée directement à partir de la grandeur $C_{m0}$ représentative de la concentration dudit élément chimique mesurée par le capteur à l'instant où le procédé itératif est lancé ou immédiatement avant son lancement. Cette valeur est calculée à l'aide d'une seule mesure réalisée par le capteur, et n'est pas la moyenne de plusieurs mesures réalisées par le capteur à plusieurs instants. Le calcul de $C_{e0}$ ne fait pas intervenir de mesures des grandeurs représentatives des débits d'injection de solution de dilution ou de solution concentrée.

L'étape d'acquisition est réalisée à l'aide d'un ou plusieurs capteurs de débits du circuit REA, et à l'aide du boremètre.

L'étape de calcul est réalisée à l'aide d'équations de Kalman.

Le filtrage de Kalman est un procédé de modélisation connu et seuls quelques éléments de théorie seront rappelés ci-dessous. L'application du filtrage de Kalman à l'estimation de la concentration en bore dans le liquide de refroidissement primaire sera ensuite détaillée.

Le filtre de Kalman vise à modéliser l'état d'un processus caractérisé par un vecteur d'état x. Il repose sur les deux équations suivantes.

$$\text{Equation d'évolution du vecteur d'état : } x_{k+1} = A\,x_k + B\,u_k + w_k$$

$$\text{Equation d'observation : } y_k = D\,x_k + v_k.$$

L'équation d'évolution du vecteur d'état correspond à une modélisation du processus, u étant une commande et w un bruit (bruit de modélisation et/ou bruit de commande). Le vecteur d'état x du processus est la grandeur que l'on cherche à estimer. Il peut être à une ou plusieurs dimensions, chaque coordonnée du vecteur correspondant à un paramètre caractéristique du processus.

Le vecteur de mesure y est fonction de l'état x et du bruit de mesure v. y a la même dimension que x.

A, B et D sont des matrices carrées, de même dimension que x.

Le filtre de Kalman permet de pondérer l'information a priori, obtenue à partir des commandes précédentes, avec les mesures réalisées en fonctionnement et disponibles à l'instant donné. Cette pondération est optimale si les bruits v et w, supposés indépendants, de moyenne nulle et de covariances connues, sont gaussiens. Elle permet de minimiser l'espérance mathématique de l'erreur entre l'état et son estimation.

Les équations du filtre de Kalman à l'état discret sont les suivantes.

Dans le texte qui va suivre, $\underline{x}_{k|k}$ symbolise la meilleure estimation de $x_k$ obtenue à partir des données disponibles au pas k, c'est-à-dire avant que la mesure $y_{k+1}$ soit disponible. De même, $\underline{x}_{k+1/k}$ et $\underline{y}_{k+1|k}$ symbolisent les meilleures estimations de $x_{k+1}$ et $y_{k+1}$ obtenue à partir des données disponibles au pas k, c'est-à-dire avant que la mesure $y_{k+1}$ soit disponible.

$$\text{L'équation d'état donne : } \underline{x}_{k+1|k} = A\, \underline{x}_{k|k} + B\, u_k.$$

$$\text{L'erreur d'estimation est donnée par : } x_{k+1} - \underline{x}_{k+1|k} = A\, [x_k - \underline{x}_{k|k}] + w_k.$$

La matrice de covariance de l'erreur d'estimation $x_{k+1} - \underline{x}_{k+1|k}$ est symbolisée par $P_{k+1|k}$. Le bruit w, de matrice de covariance W, étant indépendant de l'estimation, on a :

$$P_{k+1|k} = A\, P_{k|k}\, A^T + W$$

De l'équation d'observation, on peut de même déduire la mesure prédite $y_{k+1|k}$ et la matrice de covariance de l'erreur associée $Q_{k+1/k}$ :

$$\underline{y}_{k+1|k} = D\, \underline{x}_{k+1|k}$$

$$Q_{k+1|k} = D\, P_{k+1|k}\, D^T + V$$

où V est la matrice de covariance du bruit v.

Une fois la mesure $y_{k+1}$ connue, on a

$$\underline{x}_{k+1|k+1} = \underline{x}_{k+1|k} + K_{k+1}\, (y_{k+1} - \underline{y}_{k+1|k}),$$

soit :

$$\underline{x}_{k+1|k+1} = \underline{x}_{k+1|k} + K_{k+1}\, (y_{k+1} - D\, \underline{x}_{k+1|k})$$

avec

$$K_{k+1} = P_{k+1|k}\, D^T\, (D\, P_{k+1|k}\, D^T + V)^{-1}$$

et on en déduit l'expression de la matrice de covariance de l'erreur d'estimation :

$$P_{k+1|k+1} = P_{k+1|k} - K_{k+1}\, D\, P_{k+1|k},$$

soit :

$$P_{k+1|k+1} = (I - K_{k+1}\, D)\, P_{k+1|k}$$

où I est la matrice identité.

En résumé, les équations de Kalman sont les suivantes : Equations de prédiction :

$$\underline{x}_{k+1|k} = A\,\underline{x}_{k|k} + B\,u_k$$

$$P_{k+1|k} = A\,P_{k|k}\,A^T + W$$

Equations de filtrage :

$$K_{k+1} = P_{k+1|k}\,D^T\,(D\,P_{k+1|k}\,D^T + V)^{-1}$$

$$\underline{x}_{k+1|k+1} = \underline{x}_{k+1|k} + K_{k+1}\,(y_{k+1} - D\,\underline{x}_{k+1|k})$$

$$P_{k+1|k+1} = (I - K_{k+1}\,D)\,P_{k+1|k}$$

L'application de ces équations à l'estimation de la concentration en bore dans le liquide primaire va maintenant être décrite.

Le paramètre d'état et le paramètre de mesure considérés pour l'application des équations de Kalman sont différents selon que la charge injectée dans le circuit primaire est une charge d'eau ou une charge de solution concentrée en bore, ou encore qu'aucune injection n'est réalisée, comme indiqué dans le tableau ci-dessous. On distingue en pratique deux cas, la commutation entre les deux formes du paramètre d'état et entre les deux formes du paramètre de mesure étant assurée en fonction du débit de solution concentrée.

|  | Paramètre d'état x | Paramètre de mesure y |
|---|---|---|
| Débit de solution concentrée nul | $x = \ln(C(t))$ | $y = \ln(C_m)$ |
| Débit de solution concentrée non nul | $x = \ln(C^* - C(t))$ | $y = \ln(C^* - C_m)$ |

Le paramètre de mesure est obtenu directement à partir de la concentration en bore mesurée par le boremètre, $y = \ln(C_m)$ (dilution) ou $y = \ln(C^* - C_m)$ (borication). La valeur $C^*$ considérée dans les formules des paramètres d'état et de mesure (cas où le débit de solution concentrée est non nul) correspond à la concentration en bore de la solution concentrée.

Les équations de Kalman, adaptées à l'estimation de la concentration en bore, sont scalaires et deviennent :

- Équations de prédiction :

$$\underline{x}_{k+1|k} = \underline{x}_{k|k} + u_k$$

avec $u_k = -(\Delta t_k / Vol)\,q_k$ où $\Delta t_k$ est la durée du pas de temps k, considéré constant, et $q_k$ le débit d'injection à l'instant k, $q_k$ étant pris égal à $q_{dk}$ quand le débit de solution concentré est nul et étant pris égal à $q_{ck}$ quand le débit de solution concentré est non nul.

$$P_{k+1|k} = P_{k|k} + W$$

avec P variance du paramètre d'état x, et W variance du bruit w.

- Équations de filtrage :

$$\underline{x}_{k+1|k+1} = \underline{x}_{k+1|k} + K_{k+1}\,(y_{k+1} - \underline{x}_{k+1|k})$$

$$P_{k+1|k+1} = (1 - K_{k+1}) \, P_{k+1|k}$$

avec $K_{k+1} = P_{k+1|k} / (P_{k+1|k} + V)$, avec V variance du bruit v.

Comme le montre la figure 1, à chaque pas k, l'étape de calcul se compose d'une sous-étape de mise en forme des paramètres d'état et de mesure, suivi d'une sous-étape de calcul. Au cours de la sous-étape de mise en forme, la forme des paramètres d'état et de mesure est d'abord choisie en fonction de la valeur représentative du débit de solution concentrée acquise à l'étape d'acquisition. Puis, toujours au cours de la sous-étape de mise en forme, les valeurs initiales des paramètres d'état et de mesure à considérer pour la sous-étape de calcul sont estimées à partir des valeurs finales obtenues au pas k -1. Si la forme des paramètres d'état et de mesure est la même au pas k et au pas k-1, les valeurs initiales des paramètres d'état et de mesure à considérer au pas k sont égales aux valeurs finales obtenues au pas k-1. En revanche, si les formes des paramètres d'état et de mesure sont différentes au pas k et au pas k-1, les valeurs finales des paramètres d'état et de mesure obtenues au pas k-1 doivent subir une conversion pour obtenir les valeurs initiales à considérer au pas k.

Les deux sous-étapes de l'étape de calcul sont réalisées à l'aide d'un même microprocesseur.

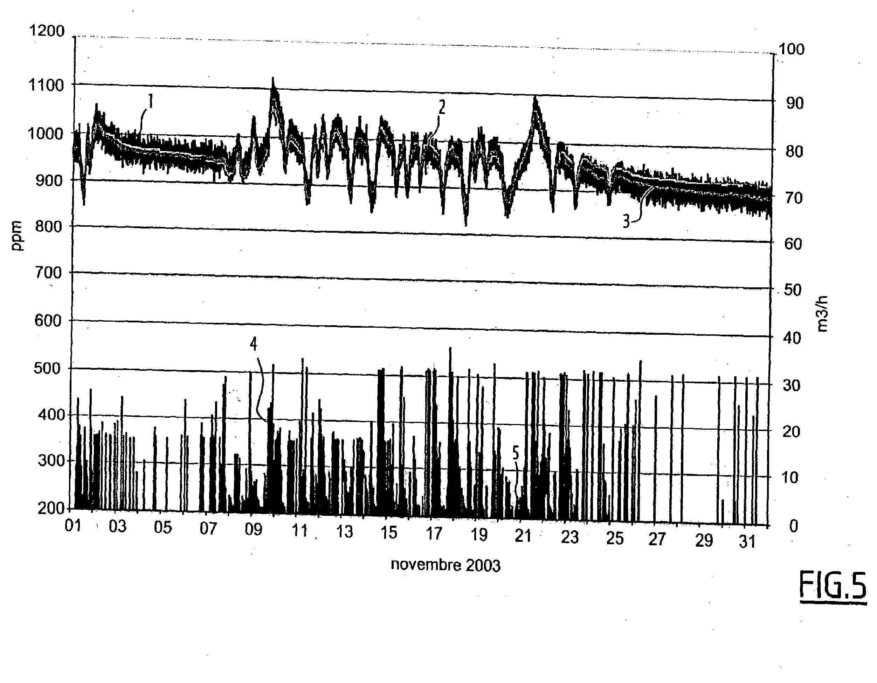

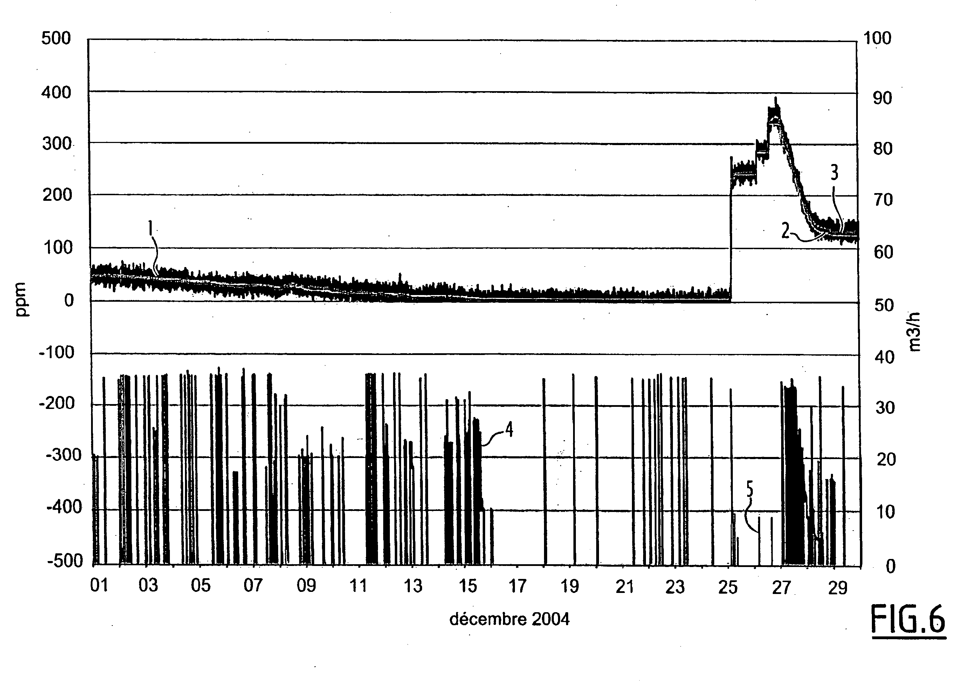

Les performances comparées du procédé d'estimation par filtrage de Kalman et des autres procédés évoqués ci-dessus (mesure directe et intégration des débits) ont été évaluées pour trois épuisements du cycle 13 de la centrale nucléaire de Cattenom 1 en France, sur des périodes d'un mois afin d'estimer une éventuelle dérive : novembre 2003 pour le début du cycle (figure 4), janvier 2004 pour le milieu du cycle (figure 5) et décembre 2004 pour la fin du cycle (figure 6). Les performances comparées pour la reproduction à court terme des actions de borication ou de dilution ont été évaluées sur une journée chargée, le 30 novembre 2003, toujours pour la centrale nucléaire de Cattenom 1 (figure 2).

Comme l'illustrent les figures 2 et 4 à 6, l'utilisation conjointe des informations de commande (débits d'injection) et des mesures de concentration en bore permet de cumuler les avantages du procédé par intégration des débits et du procédé utilisant directement les valeurs lues par les bore-mètres. Un réglage approprié du rapport V/W permet d'ajuster les poids respectifs de la commande et de la mesure.

Le rapport V/W est choisi généralement entre 100 et 10000, de préférence entre 1000 et 5000, et encore plus de préférence autour de 2000. Une augmentation du rapport V/W privilégie la commande par rapport à la mesure. Elle permet donc de suivre plus fidèlement les injections d'eau ou de solution concentrée en bore, mais peut donner des estimations plus éloignées de la mesure. Au contraire, une diminution du rapport V/W privilégie la mesure par rapport à la commande. Elle donne des estimations plus proches de la mesure mais suit les injections d'eau ou de solution concentrée en bore avec un retard plus important.

Comme avec le procédé par intégration des débits, la concentration en bore estimée par filtrage de Kalman suit rapidement les variations de concentration en bore dues aux actions de borication et de dilution. On constate sur les figures 2 et 4 à 6 que lors des variations de concentration en bore dues à une injection d'eau ou de bore le filtre de Kalman suit de près, à court terme, la méthode d'intégration des débits. C'est là que se situe le gain dans la réduction du retard par rapport à la concentration en bore mesurée.

A plus long terme, le filtre de Kalman suit la mesure, sous réserve que les injections d'eau ou de solution concentrée en bore soient espacées. Il ne se produit donc pas de dérive à terme comme dans la méthode par intégration des débits (voir par exemple les derniers jours sur la figure 5) car le filtre de Kalman se recale par rapport à la mesure. Le problème du retard de la mesure sur la concentration en bore vraie est par ailleurs évacué, car la mesure n'est vraiment prise en compte que quand il n'y a pas de variation rapide de la concentration en bore due à la commande (injections venant du REA).

Contrairement au procédé par intégration, cette méthode permet de voir les variations de concentration en bore non dues directement aux injections de charges venant du REA du fait que les mesures sont prises en compte, avec cependant le retard inhérent à la mesure si les variations sont rapides.

De plus, il n'est nullement nécessaire d'introduire une valeur initiale de concentration en bore précise lors de l'étape d'initialisation. Le filtre de Kalman se charge, à partir d'une valeur initiale quelconque, de reconstituer en quelques instants la concentration en bore à l'aide de la mesure. Toutefois, plus la valeur initiale est juste plus rapidement la concentration en bore estimée rejoint la valeur qu'elle aurait eue avec une initialisation juste. A titre d'exemple, pour un écart initial de 100 ppm, il y a moins de 1 ppm d'écart au bout de 25 minutes. La figure 3 illustre le comportement du filtre de Kalman avec une initialisation aberrante à 500 ppm (courbe 3') au lieu d'environ 1075 ppm (courbe 3 correspondant à une initialisation avec la concentration mesurée par le bore). Les courbes 3 et 3' convergent rapidement et sont confondues moins de trois heures après l'initialisation. Le fait de prendre comme valeur initiale la première valeur de la concentration en bore mesurée par le boremètre (comme pour la courbe 3), est une méthode d'initialisation pratique donnant un écart initial faible par rapport à la concentration vraie (de l'ordre de 25 ppm au plus) et une convergence très rapide.

En outre, le procédé par filtre de Kalman permet la réduction importante du bruit par rapport à la mesure seule (réduction d'un facteur 10 sur 24 heures de stabilité en novembre 2003 sur la figure 4).

Pour améliorer la précision de la modélisation à court terme, les retards (de l'ordre d'une dizaine de minutes) dus au temps d'homogénéisation de la charge injectée dans le liquide primaire et au temps de parcours de la charge injectée le long du circuit primaire peuvent être pris en compte. Le temps de parcours peut être traduit par un décalage temporel de quelques minutes (retard pur) sur les débits d'injection De même, l'introduction d'une constante de temps (filtrage du premier ordre des débits) permet de simuler les effets de l'homogénéisation de la charge injectée dans le circuit primaire. Ces améliorations ne sont utiles que pour augmenter la précision de la concentration en bore estimée à l'échelle de quelques minutes après les injections.

Il est également possible de prendre en compte le volume mort restant dans la tuyauterie d'injection du REA à la fin de chaque injection. En effet, les charges d'eau et de solution concentrée en bore transitent par la même tuyauterie d'injection. Par ailleurs, les charges ne sont jamais injectées en totalité, un faible volume mort restant dans la tuyauterie d'injection en fin d'injection. Ce volume est de l'ordre d'une centaine de litres. Chaque nouvelle charge injectée « pousse » dans la tuyauterie primaire le volume mort restant de la charge précédente. L'effet de volume mort apparaît donc quand le REA injecte successivement deux charges de natures différentes, eau puis solution concentrée en bore ou inversement. Cet effet peut être pris en compte dans la modélisation en considérant que, lors de l'injection d'une charge de nature différente de la précédente, l'injection de la charge précédente se poursuit tant qu'un volume équivalent au volume mort n'a pas été injecté. Sans cet ajout à la simulation, la concentration en bore estimée peut temporairement, après la fin de la deuxième injection, différer de 3 à 8 ppm par rapport à la concentration vraie.

L'utilisation d'un filtre de Kalman permet donc la reconstruction de la concentration en bore vraie à partir des débits de dilution et de borication, mais aussi à partir de la mesure de la concentration en bore, de manière très satisfaisante.

Du fait que l'information de la concentration en bore dans le circuit primaire est obtenue sans retard et avec un bruit fortement réduit, les applications où cette information doit être comparée à une autre peuvent être plus rapides et la comparaison plus étroite. Ainsi par exemple, dans un système de surveillance intégrant un modèle de calculs neutroniques, la concentration en bore estimée est comparée à la concentration en bore théorique calculée afin de vérifier le comportement du modèle neutronique. La concentration en bore peut aussi être comparée à un seuil pour détecter les accidents de réactivité telle la dilution intempestive.

Par ailleurs, les calculs des volumes d'eau ou de solution concentrée en bore à injecter par les opérateurs se basant sur la concentration en bore estimée seront plus précis. On peut en attendre un pilotage du coeur du réacteur par des actions plus fines, de telle sorte que les injections de charges dans le liquide primaire seront moins nombreuses, et donc que le volume des effluents radioactifs générés par ces injections sera réduit.

De plus, le recours au dosage chimique par échantillonnage du liquide primaire peut également être réduit. Ces dosages sont particulièrement longs. En particulier, lors des essais périodiques, pour lesquels une mesure de la concentration en bore juste est requise, le nombre d'échantil-lons à prélever et analyser sera moins grand. Il en résulte un gain de temps appréciable.

Le procédé décrit ci-dessus peut présenter de multiples variantes.

Le procédé peut être appliqué à l'estimation de la concentration d'un élément chimique du liquide de refroidissement primaire du réacteur autre que le bore.

Le procédé peut être appliqué pour tout type de réacteur nucléaire dans lequel on contrôle la concentration d'un élément chimique du liquide de refroidissement primaire, par injection d'une solution de dilution ou d'une solution concentrée en ledit élément chimique.

Il est possible de considérer dans le procédé que les injections de solution de dilution et de solution concentrée sont toutes réalisées à un même débit prédéterminé. Dans ce cas, l'étape d'acquisition des grandeurs représentatives des débits d'injection de la solution de dilution et de la solution concentrée se limite à acquérir seulement, à chaque pas, si oui ou non une injection de solution de dilution est en cours à partir du circuit REA, et si oui ou non une injection de solution concentrée est en cours à partir du circuit REA.

De même, la durée de chaque pas de temps $\Delta t_k$ peut être considérée comme constante, ou peut être considérée comme variable.

La concentration C* de la solution concentrée n'est pas nécessairement égale à 7000 ppm, et peut être différente.

L'étape d'initialisation du procédé peut être réalisée de multiples façons. Elle peut être réalisée comme décrit ci-dessus en utilisant la première mesure réalisée par le capteur, mais peut être également, de façon non préférée, réalisée en considérant la moyenne des mesures réalisées par le capteur sur une période de temps déterminée, ou même en fixant arbitrairement la valeur de la concentration à une valeur déterminée.

La solution de dilution peut être une solution pratiquement totalement dépourvue de l'élément chimique, par exemple de l'eau techniquement pure, ou être une solution contenant une faible concentration de l'élément chimique par rapport au liquide primaire, par exemple une concentration inférieure à 100 ppm.

Le basculement, à la première sous-étape de calcul, entre les deux formes des paramètres d'état et de mesure peut être réalisé non pas selon que le débit de solution concentrée est nul ou non, mais plutôt selon que la grandeur $q_c$ représentative de ce débit est inférieure à une limite prédéterminée ou non. Cette limite est choisie faible au regard du débit d'injection nominal de la solution concentrée.

## Revendications

1. Procédé d'estimation de la concentration (C) en un élément chimique dans le liquide de refroidissement primaire d'un réacteur nucléaire, l'élément chimique étant le bore ou un composé du bore, ce réacteur comprenant des moyens pour injecter dans le liquide de refroidissement primaire une solution de dilution de concentration en ledit élément chimique inférieure à une limite de concentration prédéterminée, des moyens pour injecter dans le liquide de refroidissement primaire une solution concentrée en ledit élément chimique de concentration prédéterminée (C*), et un capteur apte à mesurer une grandeur ($C_m$) représentative de la concentration dudit élément chimique dans le liquide de refroidissement primaire, **caractérisé en ce que** le procédé est un procédé itératif comprenant de manière répétée à chaque pas de temps k :

   - une étape d'acquisition d'une grandeur ($q_{dk}$) représentative du débit d'injection de la solution de dilution au pas k, d'une grandeur ($q_{ck}$) représentative du débit d'injection de la solution concentrée au pas k, et d'une grandeur ($C_{mk}$) représentative de la concentration dudit élément chimique mesurée par le capteur dans le liquide de refroidissement primaire ;
   - une étape de calcul d'une valeur estimée ($C_{ek+1}$) de la concentration dudit élément chimique dans le liquide de refroidissement primaire au pas k+1 en fonction des grandeurs représentatives ($q_{dk}$, $q_{ck}$, $C_{mk}$) acquises à l'étape k, l'étape de calcul étant réalisée à l'aide d'équations de Kalman, l'étape de calcul au pas k étant réalisée en utilisant dans les équations de Kalman un paramètre d'état $x = \ln(C)$ quand la grandeur ($q_{ck}$) représentative du débit d'injection de la solution concentrée est inférieur à une limite de débit prédéterminée, et un paramètre d'état $x = \ln(C^*-C)$ quand la grandeur ($q_{ck}$) représentative du débit d'injection de la solution concentrée est supérieur à ladite limite de débit prédéterminée.

2. Procédé selon la revendication 1, **caractérisé en ce que** l'étape de calcul au pas k est réalisée en utilisant dans les équations de Kalman un paramètre de mesure $y = \ln(C_m)$ quand la grandeur ($q_{ck}$) représentative du débit d'injection de la solution concentrée est inférieur à ladite limite de débit prédéterminée, et un paramètre d'état $y = \ln(C^*-C_m)$ quand la grandeur ($q_{ck}$) représentative du débit d'injection de la solution concentrée est supérieur à ladite limite de débit prédéterminée.

3. Procédé selon la revendication 2, **caractérisé en ce que** les équations utilisées à l'étape de calcul sont :

$$\underline{X}_{k+1/k} = \underline{X}_{k/k} + u_k$$

$u_k = -(\Delta t_k/Vol)\, q_{dk}$ quand la grandeur ($q_{ck}$) représentative du débit d'injection de la solution concentrée au pas k est inférieur à ladite limite de débit prédéterminée

$u_k = -(\Delta t_k/Vol)\, q_{ck}$ quand la grandeur ($q_{ck}$) représentative du débit d'injection de la solution concentrée au pas k est supérieur à ladite limite de débit prédéterminée

$$P_{k+1/k} = P_{k/k} + W$$

$$\underline{X}_{k+1/k+1} = \underline{X}_{k+1/k} + K_{k+1}\,(y_{k+1} - \underline{X}_{k+1/k})$$

$$P_{k+1/k+1} = (1 - K_{k+1})\, P_{k+1/k}$$

$$K_{k+1} = P_{k+1/k} / (P_{k+1/k} + V)$$

avec $\underline{x}_{k/k}$ valeur du paramètre d'état x au pas k déterminée à partir des données disponibles au pas k, $\Delta t_k$ durée du pas de temps k, Vol volume du circuit primaire, $P_{k/k}$ variance du paramètre d'état x au pas k déterminée à partir des données disponibles au pas k, W et V étant des constantes prédéterminées.

**4.** Procédé selon la revendication 3, **caractérisé en ce que** le rapport V/W est compris entre 100 et 10000.

**5.** Procédé selon l'une quelconque des revendications précédentes, **caractérisé en ce qu'**il comprend une étape d'initialisation au cours de laquelle une valeur estimée initiale ($C_{e0}$) de la concentration dudit élément chimique dans le liquide primaire est calculée directement à partir de la grandeur ($C_{m0}$) représentative de la concentration dudit élément chimique mesurée par le capteur dans le liquide de refroidissement primaire.

**6.** Procédé selon l'une quelconque des revendications précédentes, **caractérisé en ce que** le réacteur nucléaire est un réacteur nucléaire à eau sous pression.

## Patentansprüche

**1.** Verfahren zum Abschätzen der Konzentration (C) eines chemischen Elements in der Primärkühlflüssigkeit eines Kernreaktors, wobei das chemische Element Bor oder eine Borverbindung ist, wobei der Reaktor Mittel, um in die Primärkühlflüssigkeit eine Lösung zur Verdünnung der Konzentration des besagten chemischen Elements unter eine vorgegebene Grenzkonzentration einzuspritzen, Mittel, um in die Primärkühlflüssigkeit eine konzentrierte Lösung des besagten chemischen Elements mit vorgegebener Konzentration (C*) einzuspritzen, und einen Sensor aufweist, welcher geeignet ist, um eine Größe ($C_m$) zu messen, welche für die Konzentration des besagten chemischen Elements in der Primärkühlflüssigkeit repräsentativ ist, **dadurch gekennzeichnet, dass** das Verfahren ein iteratives Verfahren ist, welches in wiederholender Art in jedem Zeitschritt k aufweist:

- einen Schritt zum Erfassen einer Größe ($q_{dk}$), welche für die Einspritzmenge der Lösung zur Verdünnung im Schritt k repräsentativ ist, einer Größe ($q_{ck}$), welche für die Einspritzmenge der konzentrierten Lösung im Schritt k repräsentativ ist, und einer Größe ($C_{mk}$), welche für die Konzentration des besagten chemischen Elements, welche mittels des Sensors in der Primärkühlflüssigkeit gemessen wird, repräsentativ ist;
- einen Schritt zum Berechnen eines Schätzwertes ($C_{ek+1}$) der Konzentration des besagten chemischen Elements in der Primärkühlflüssigkeit im Schritt k+1 als Funktion der repräsentativen Größen ($q_{dk}$, $q_{ck}$, $C_{mk}$), welche im Schritt k erfasst wurden, wobei der Schritt zum Berechnen mittels Kalman-Gleichungen durchgeführt wird, wobei der Schritt des Berechnens im Schritt k unter Verwendung eines Zustandsparameters x = ln(C), wenn die Größe ($q_{ck}$), welche für die Einspritzmenge der konzentrierten Lösung repräsentativ ist, kleiner als eine vorgegebene Grenzmenge ist, und eines Zustandsparameters x = ln(C*-C), wenn die Größe ($q_{ck}$), welche für die Einspritzmenge der konzentrierten Lösung repräsentativ ist, größer als die besagte vorgegebene Grenzmenge ist, in den Kalman-Gleichungen durchgeführt wird.

**2.** Verfahren gemäß Anspruch 1, **dadurch gekennzeichnet, dass** der Schritt zum Berechnen im Schritt k unter Verwendung eines Messparameters y = ln($C_m$), wenn die Größe ($q_{ck}$), welche für die Einspritzmenge der konzentrierten Lösung repräsentativ ist, kleiner als die besagte vorgegebene Grenzmenge ist, und eines Zustandsparameters y = ln(C*-$C_m$), wenn die Größe ($q_{ck}$), welche für die Einspritzmenge der konzentrierten Lösung repräsentativ ist, größer als die besagte vorgegebene Grenzmenge ist, in den Kalman-Gleichungen durchgeführt wird.

**3.** Verfahren gemäß Anspruch 2, **dadurch gekennzeichnet, dass** die im Schritt des Berechnens verwendeten Gleichungen sind:

$$\underline{X}_{k+1/k} = \underline{X}_{k/k} + u_k,$$

$u_k$ = -($\Delta t_k$/Vol) $q_{dk}$, wenn die Größe ($q_{ck}$), welche für die Einspritzmenge der konzentrierten Lösung im Schritt k repräsentativ ist, kleiner als die besagte vorgegebene Grenzmenge ist,
$u_k$ = -($\Delta t_k$/Vol) $q_{ck}$, wenn die Größe ($q_{ck}$), welche für die Einspritzmenge der konzentrierten Lösung im Schritt k repräsentativ ist, größer als die besagte vorgegebene Grenzmenge ist,

$$P_{k+1/k} = P_{k/k} + W,$$

$$\underline{x}_{k+1/k+1} = \underline{x}_{k+1/k} + K_{k+1} (y_{k+1} - \underline{x}_{k+1/k}),$$

$$P_{k+1/k+1} = (1 - K_{k+1}) P_{k+1/k},$$

$$K_{k+1} = P_{k+1/k} / (P_{k+1/k} + V),$$

mit: $\underline{x}_{k/k}$ Wert des Zustandsparameters x im Schritt k, welcher aus im Schritt k vorhandenen Daten bestimmt wird, $\Delta t_k$ Länge des Zeitschritts k, Vol Volumen des Primärkreislaufs, $P_{k/k}$ Varianz des Zustandsparameters x im Schritt k, welche aus im Schritt k vorhandenen Daten bestimmt wird, wobei W und V vorgegebene Konstanten sind.

4. Verfahren gemäß Anspruch 3, **dadurch gekennzeichnet, dass** der Quotient V/W zwischen 100 und 10000 ist.

5. Verfahren gemäß irgendeinem der vorangehenden Ansprüche, **dadurch gekennzeichnet, dass** es einen Initialisierungsschritt aufweist, in welchem ein Anfangsschätzwert ($C_{e0}$) der Konzentration des besagten chemischen Elements in der Primärflüssigkeit direkt aus der Größe ($C_{m0}$), welche für die Konzentration des besagten chemischen Elements, welche mittels des Sensors in der Primärkühlflüssigkeit gemessen wird, repräsentativ ist, berechnet wird.

6. Verfahren gemäß irgendeinem der vorangehenden Ansprüche, **dadurch gekennzeichnet, dass** der Kernreaktor ein Druckwasserreaktor ist.

**Claims**

1. A process for estimating the concentration (C) of a chemical element in the primary coolant of a nuclear reactor, the chemical element being boron or a boron compound, the reactor comprising means for injecting a solution for diluting the concentration of the said chemical element below a predetermined limit into the primary coolant, means for injecting a concentrated solution of the said chemical element having a predetermined concentration (C*) into the primary coolant, and a sensor able to measure a quantity ($C_m$) representing the concentration of the said chemical element in the primary coolant, **characterised in that** the process is an iterative process comprising repeatedly in each time step k :

   - a stage of acquisition of a quantity ($q_{dk}$) representing the injected flow of the dilution solution in step k, a quantity ($q_{ck}$) representative of the injected flow of concentrated solution in step k, and a quantity ($C_{mk}$) representing the concentration of the said chemical element measured by the sensor in the primary coolant;
   - a stage of calculating an estimated value ($C_{ek+1}$) for the concentration of the said chemical element in the primary coolant in step k+1 based on the representative quantities ($q_{dk}$, $q_{ck}$, $C_{mk}$) acquired in step k, the calculation stage being carried out with the help of Kalman equations, the stage of calculation in step k being carried out by considering in the Kalman equations a state parameter x = ln(C) when the quantity ($q_{ck}$) representing the injected flow of concentrated solution is below a predetermined limit and a state parameter x = ln(C*-C) when the quantity ($q_{ck}$) representing the injected flow of the concentrated solution is above the said predetermined limit.

2. A process according to Claim 1, **characterised in that** the calculation stage in step k is carried out by considering in the Kalman equations a measured parameter y = ln($C_m$) when the quantity ($q_{ck}$) representing the injected flow of concentrated solution is below a predetermined limit and a state parameter y = ln(C*-$C_m$) when the quantity ($q_{ck}$) representing the injected flow is above the said predetermined limit.

3. A process according to Claim 2, **characterised in that** the equations used in the calculation stage are :

$$\underline{x}_{k+1/k} = \underline{x}_{k/k} + u_k$$

$u_k = -(\Delta t_k/Vol)\, q_{dk}$ when the quantity ($q_{ck}$) representing the injected flow of concentrated solution in step k is below a predetermined limit

$u_k = -(\Delta t_k/Vol)\, q_{ck}$ when the quantity ($q_{ck}$) representing an injected flow of concentrated solution in step k is above a predetermined limit

$$P_{k+1/k} = P_{k/k} + W$$

$$\underline{x}_{k+1/k+1} = \underline{x}_{k+1/k} + K_{k+1}\left(y_{k+1} - \underline{x}_{k+1/k}\right)$$

$$P_{k+1/k+1} = (1 - K_{k+1})\, P_{k+1/k}$$

$$K_{k+1} = P_{k+1/k} / (P_{k+1/k} + V)$$

where $\underline{x}_{k/k}$ is the value of state parameter x in step k determined from the data available in step k, $\Delta t_k$ is the duration of time step k, Vol is the volume of the primary circuit, $P_{k/k}$ is the variance for the state parameter x in step k determined from the data available in step k, and W and V are predetermined constants.

4. A process according to Claim 3, **characterised in that** the V/W ratio lies between 100 and 10000.

5. A process according to any one of the preceding claims, **characterised in that** it comprises an initialisation stage in the course of which an initial estimated value ($C_{e0}$) for the concentration of the said chemical element in the primary coolant is calculated directly from the quantity ($C_{m0}$) representing the concentration of the said chemical element measured by the sensor in the primary coolant.

6. A process according to any one of the preceding claims, **characterised in that** the nuclear reactor is a pressurised water nuclear reactor.

Acquisition

$q_{ck}$

$q_{dk}$

$Cm_k$

1ère acquisition

Première
sous-étape :
mise en forme
pour Kalman

Initialisation

Deuxième
sous-étape :
filtre de Kalman

$Ce_k$

Calcul

FIG.1

30 novembre 2003

FIG.2

EP 2 104 939 B1

FIG.3

FIG.4

novembre 2003

EP 2 104 939 B1

FIG.5

FIG.6

EP 2 104 939 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4204259 A